# DEMANDE DE BREVET EUROPEEN

(11) **EP 4 274 009 A1**
(43) Date de publication de la demande: **08.11.2023**
(21) Numéro de dépôt: 22305672.2
(22) Date de dépôt: 05.05.2022
(51) Int. Cl.: H01M 50/209, H01M 50/264

(54) **ENSEMBLE POUR LA FORMATION D'UN ORGANE ÉLECTRIQUE COMPRENANT DES CELLULES ÉLECTROCHIMIQUES ET PROCÉDÉ DE MONTAGE ASSOCIÉ**

(71) Demandeur: Automotive Cells Company SE, 92300 Levallois Perret (FR)
(72) Inventeur: BAYLAC, Johan, 33800 BORDEAUX (FR); MATHIEU, Alexandre, Pierre, Maurice, 33300 BORDEAUX (FR); de ROLAND, Geoffroy, Yves, Gérard, 33520 BRUGES (FR); BRIEN, Patrick, 33290 PAREMPUYRE (FR)
(74) Mandataire: Lavoix

(57) **Abrégé**

L'invention concerne un ensemble (10) pour la formation d'un organe électrique, comprenant un support (14) et une cellule électrochimique (16),
le support comportant un fond (20) et un premier (22) et un second (24) dispositifs de fixation,
la cellule (16) s'étendant entre une première (80) et une seconde (82) extrémités,
le support et la cellule étant configurés pour la mise en contact de la première extrémité (80) de la cellule et du premier dispositif (22), la cellule étant dans une position initiale, puis pour la rotation de la cellule par rapport au support jusqu'à une position finale,
le second dispositif (24) comprenant un élément (40) déformable, apte à s'emboîter élastiquement sur la seconde extrémité (82) de la cellule, de sorte à maintenir ladite cellule en position finale.

## Description

La présente invention concerne un ensemble pour la formation d'un organe électrique.

L'invention s'applique particulièrement à la fabrication de batteries de véhicules électriques ou hybrides.

Une cellule électrochimique comprend des électrodes et un électrolyte, reçus dans une enveloppe externe fermée, en général de forme sensiblement parallélépipédique. La cellule électrochimique comprend généralement des bornes en contact avec les électrodes et fixées à l'enveloppe externe, à l'extérieur de ladite enveloppe.

Par exemple, la cellule électrochimique comprend un empilement d'électrodes positives reliées les unes aux autres et un empilement d'électrodes négatives reliées les unes aux autres, séparés par un séparateur. Un tel assemblage, connu sous le terme « stack », est reçu dans l'enveloppe externe.

Il est connu d'assembler, en série et/ou en parallèle, une pluralité de cellules électrochimiques afin de réaliser des modules ou des batteries électriques, à l'aide d'un dispositif d'interconnexion assurant un contact électrique entre les bornes de deux cellules voisines.

Afin d'assembler mécaniquement les cellules reliées électriquement, il est connu de les disposer alignées sur un support plan ou un rail et de les maintenir aux deux extrémités par des plaques parallèles, un tel assemblage étant désigné sous le terme « module » ou « pack ».

Cependant, cet assemblage ne permet pas d'extraire individuellement une cellule sans démonter ou détruire une partie importante dudit assemblage.

La présente invention a pour but de permettre la réalisation de modules ou de packs, avec un assemblage mécanique simplifié des cellules, ainsi qu'un démontage individuel ou en blocs facilité desdites cellules.

A cet effet, l'invention a pour objet un ensemble du type précité, comprenant un support et au moins une première cellule électrochimique. Le support comporte : un fond comprenant une face principale ; et un premier et un second dispositifs de fixation, en saillie par rapport à la face principale du fond, les premier et second dispositifs de fixation étant en vis-à-vis selon une direction d'assemblage. La première cellule électrochimique comprend une enveloppe externe s'étendant selon une direction longitudinale entre une première et une seconde extrémités.

Le support et la première cellule électrochimique sont configurés pour la mise en contact de la première extrémité de la première cellule et du premier dispositif de fixation, la première cellule étant dans une première position initiale par rapport au support, puis pour la rotation de la première cellule par rapport au support dans un premier plan de rotation comprenant la direction d'assemblage, jusqu'à une première position finale,
le second dispositif de fixation comprenant au moins un premier élément déformable élastiquement, apte à s'emboîter élastiquement sur la seconde extrémité de la première cellule durant la rotation de ladite première cellule, de sorte à maintenir la première cellule en première position finale.

Suivant d'autres aspects avantageux de l'invention, l'ensemble comporte l'une ou plusieurs des caractéristiques suivantes, prises isolément ou suivant toutes les combinaisons techniquement possibles :
- le premier dispositif de fixation comprend une surface de came recourbée, ladite surface de came s'étendant selon une direction génératrice perpendiculaire au premier plan de rotation ; et la première extrémité de l'enveloppe externe de la première cellule électrochimique comprend : une première face d'extrémité, sensiblement perpendiculaire à la direction longitudinale ; et un premier ergot formant saillie par rapport à ladite première face d'extrémité, le premier ergot comprenant une contre-surface de came, recourbée et sensiblement complémentaire de la surface de came du premier dispositif de fixation, la contre-surface de came étant apte à coulisser contre la surface de came durant la rotation de la première cellule par rapport au support dans le premier plan de rotation ;
- la surface de came est de forme concave, le premier dispositif de fixation comprenant une rainure perpendiculaire au premier plan de rotation et matérialisant ladite surface de came ; et la contre-surface de came est de forme convexe ;
- la seconde extrémité de l'enveloppe externe de la première cellule électrochimique comprend : une seconde face d'extrémité, sensiblement perpendiculaire à la direction longitudinale ; et un second ergot formant saillie par rapport à ladite seconde face d'extrémité ; et l'au moins un premier élément déformable élastiquement du second dispositif de fixation comprend une lame élastique, ladite lame élastique comprenant une encoche apte à s'emboîter sur le second ergot, de sorte à maintenir la première cellule en première position finale ;
- les premier et second ergots sont de forme identique ;
- l'enveloppe externe de la première cellule électrochimique comporte deux faces latérales, sensiblement planes et parallèles, les faces latérales reliant l'une à l'autre la première et la seconde extrémité de l'enveloppe externe ;
- l'ensemble comprend en outre au moins une deuxième cellule électrochimique, la deuxième cellule électrochimique comprenant une enveloppe externe s'étendant selon une direction longitudinale entre une première et une seconde extrémités, le support et la deuxième cellule électrochimique étant configurés pour la mise en contact de la première extrémité de la deuxième cellule au premier dispositif de fixation, la deuxième cellule étant dans une deuxième position initiale par rapport au support, puis pour la rotation de la deuxième cellule par rapport au support dans un deuxième plan de rotation comprenant la direction d'assemblage, jusqu'à une deuxième position finale, le second dispositif de fixation comprenant au moins un deuxième élément déformable élastiquement, apte à s'emboîter élastiquement sur la seconde extrémité de la deuxième cellule durant la rotation de ladite deuxième cellule, de sorte à maintenir la deuxième cellule en deuxième position finale ;
- chacune des première et deuxième cellules électrochimiques comporte deux bornes électriques, situées à l'extérieur de l'enveloppe externe de ladite première ou deuxième cellule électrochimique ;
- l'ensemble comprend en outre un dispositif d'interconnexion, apte à relier électriquement une borne électrique de la première cellule électrochimique et une borne électrique de la deuxième cellule électrochimique.

L'invention se rapporte en outre à un procédé d'assemblage de l'ensemble tel que décrit ci-dessus, comprenant les étapes suivantes : mise en contact de la première extrémité de la première cellule et du premier dispositif de fixation, la première cellule étant dans la première position initiale par rapport au support ; puis rotation de la première cellule par rapport au support dans le premier plan de rotation, de sorte à approcher du support la seconde extrémité de la première cellule ; puis emboîtement élastique du premier élément déformable élastiquement sur la seconde extrémité de la première cellule, de sorte à maintenir la première cellule en première position finale.

Suivant d'autres aspects avantageux de l'invention, le procédé comporte l'une ou plusieurs des caractéristiques suivantes, prises isolément ou suivant toutes les combinaisons techniquement possibles :
- le procédé comprend en outre les étapes suivantes : mise en contact de la première extrémité de la deuxième cellule et du premier dispositif de fixation, la deuxième cellule étant dans la deuxième position initiale par rapport au support ; puis rotation de la deuxième cellule par rapport au support dans le deuxième plan de rotation, de sorte à approcher du support la seconde extrémité de la deuxième cellule ; puis emboîtement élastique du deuxième élément déformable élastiquement sur la seconde extrémité de la deuxième cellule, de sorte à maintenir la deuxième cellule en deuxième position finale ;
- le procédé comprend ensuite une étape dans laquelle une borne électrique de la première cellule électrochimique et une borne électrique de la deuxième cellule électrochimique sont reliées électriquement par le dispositif d'interconnexion.

L'invention se rapporte en outre à un organe électrique de type module ou batterie, comprenant : un support ; au moins une première et une deuxième cellules électrochimiques ; et au moins un dispositif d'interconnexion, le support comportant : un fond comprenant une face principale ; et un premier et un second dispositifs de fixation, en saillie par rapport à la face principale du fond, les premier et second dispositifs de fixation étant en vis-à-vis selon une direction d'assemblage, chacune des première et deuxième cellules électrochimiques comprenant : une enveloppe externe s'étendant selon une direction longitudinale entre une première et une seconde extrémités ; et deux bornes électriques, situées à l'extérieur de l'enveloppe externe de ladite première ou deuxième cellule électrochimique. Le support et chacune des première et deuxième cellules électrochimiques sont configurés pour la mise en contact de la première extrémité de chacune desdites cellules électrochimiques et du premier dispositif de fixation, ladite cellule électrochimique étant dans une position initiale par rapport au support, puis pour la rotation de ladite cellule électrochimique par rapport au support dans un plan de rotation comprenant la direction d'assemblage, jusqu'à une position finale, le second dispositif de fixation comprenant au moins un premier et un deuxième éléments déformables élastiquement, chacun desdits premier et deuxième éléments déformables étant emboîté élastiquement sur la seconde extrémité, respectivement de la première et de la deuxième cellule électrochimique, l'une des bornes électriques de la première cellule électrochimique et l'une des bornes électriques de la deuxième cellule électrochimique étant reliées électriquement par le dispositif d'interconnexion, l'organe électrique étant susceptible d'être obtenu par un procédé de montage tel que décrit ci-dessus.

L'invention se rapporte en outre à un procédé de démontage de l'organe électrique décrit ci-dessus, comprenant les étapes suivantes : dissociation du dispositif d'interconnexion d'avec la borne électrique de la première cellule électrochimique et/ou d'avec la borne électrique de la deuxième cellule électrochimique ; puis appui sur une extrémité du premier élément déformable élastiquement, de sorte à dissocier ledit premier élément de la seconde extrémité de la première cellule ; et simultanément, rotation de la première cellule par rapport au support dans le premier plan de rotation, jusqu'à la première position initiale ; puis dissociation de la première extrémité de la première cellule et du premier dispositif de fixation.

L'invention sera mieux comprise à la lecture de la description qui va suivre, donnée uniquement à titre d'exemple non limitatif et faite en se référant aux dessins sur lesquels :
- la figure 1 est une vue latérale d'un ensemble selon un mode de réalisation de l'invention, dans une configuration assemblée ;
- la figure 2 est une vue de dessus d'un organe électrique selon un mode de réalisation de l'invention, réalisé à partir de l'ensemble de la figure 1 ;
- la figure 3 est une vue de détail, en perspective, de l'ensemble de la figure 1 dans la configuration assemblée ;
   la figure 4 est une vue de détail, en coupe, de l'ensemble de la figure 1 dans la configuration assemblée ; et
- la figure 5 est une vue partielle d'une étape de montage de l'ensemble de la figure 1 dans la configuration assemblée.

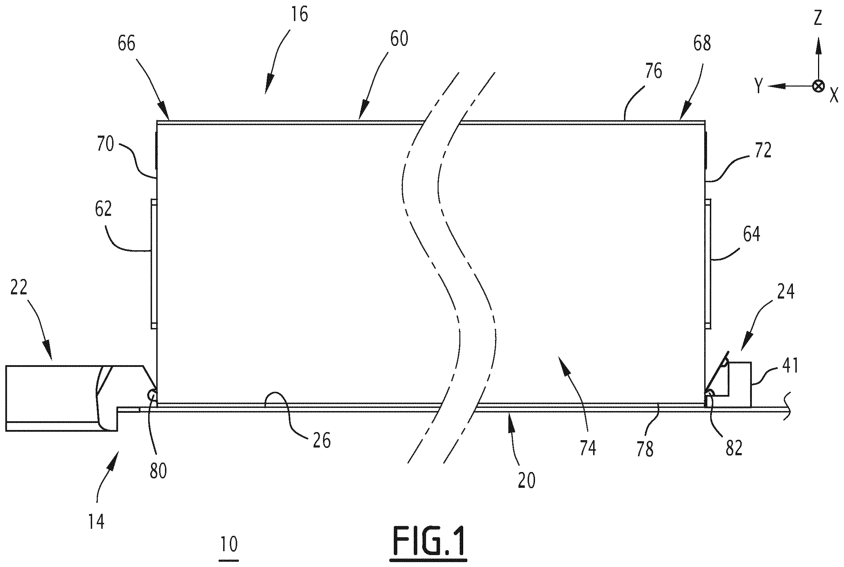

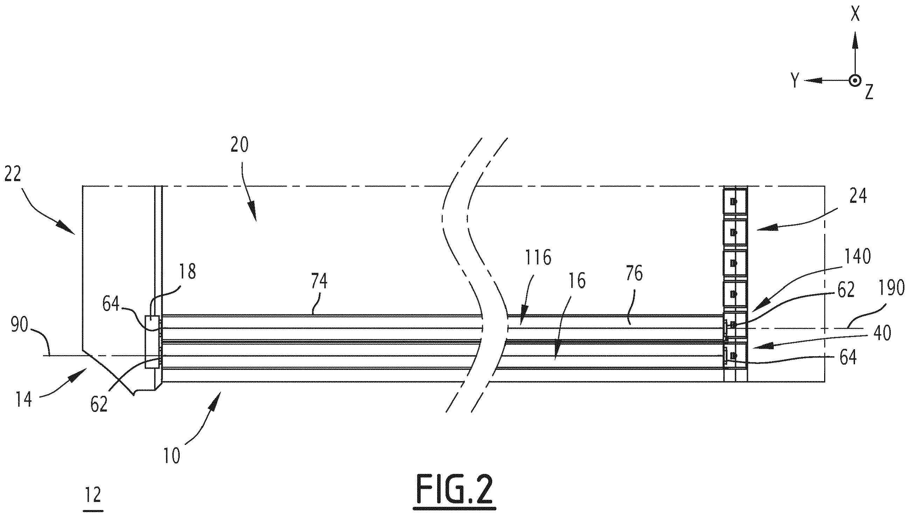

La figure 1 est une vue latérale d'un ensemble 10 dans une configuration assemblée. L'ensemble 10 est destiné à la formation d'un organe électrique 12, de type module ou batterie, visible en vue de dessus sur la figure 2.

L'ensemble 10 comprend un support 14 et au moins une première cellule électrochimique 16. Préférentiellement, l'ensemble 10 comprend en outre une deuxième cellule électrochimique 116, visible sur la figure 2. Plus préférentiellement, l'ensemble 10 comprend une pluralité de cellules électrochimiques.

De manière optionnelle, l'ensemble 10 comprend en outre au moins un dispositif d'interconnexion 18, visible sur la figure 2.

Le support 14 comporte un fond 20 et un premier 22 et un second 24 dispositifs de fixation.

Le fond 20 est sensiblement plan et comporte une première face 26, dite face principale, et une deuxième face opposée. On considère une base orthonormée (X, Y, Z) associée au support 14, la direction Z représentant la verticale. On considère que le fond 20 s'étend dans un plan (X, Y), la face principale 26 étant orientée vers le haut.

Les premier 22 et second 24 dispositifs de fixation sont solidaires du fond 20, en saillie par rapport à la face principale 26. Les premier 22 et second 24 dispositifs de fixation sont en vis-à-vis selon la direction Y, dite direction d'assemblage.

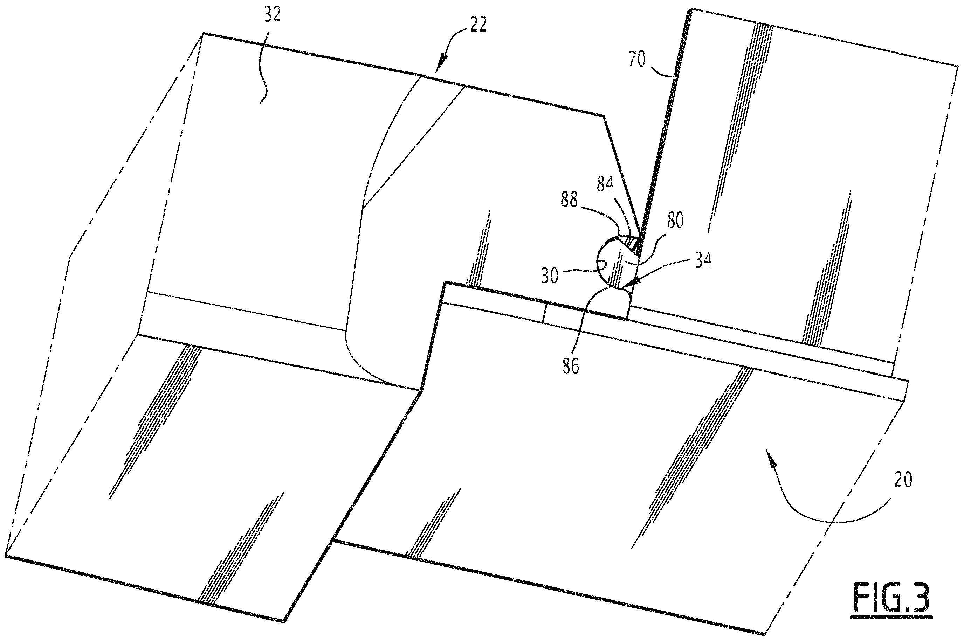

Le premier dispositif de fixation 22 comprend une surface de came 30 recourbée, visible sur la figure 3. La surface de came 30 a une forme de portion de cylindre s'étendant selon la direction X. Dans le mode de réalisation représenté, la surface de came 30 est une surface concave. Plus précisément, le premier dispositif de fixation 22 comprend : un barreau 32 s'étendant selon X ; et une rainure 34 rectiligne, ménagée dans ledit barreau, en vis-à-vis du second dispositif de fixation 24. Une surface interne de la rainure 34 matérialise la surface de came 30. Ladite rainure 34 a par exemple une section en U, un fond de ladite rainure ayant une forme de portion de cylindre de révolution.

Le second dispositif de fixation 24 comprend au moins un premier élément 40 déformable élastiquement, fixé à la face principale 26 du fond 20. Préférentiellement, le second dispositif de fixation 24 comprend un second élément 140 (figure 2) déformable élastiquement, fixé à la face principale 26, les premier et second éléments 40 et 140 étant alignés selon X.

Plus préférentiellement, comme détaillé ci-après, le second dispositif de fixation 24 comprend une pluralité d'éléments 40, 140 déformables élastiquement, fixés à la face principale 26 et alignés selon X. Lesdits éléments 40, 140 sont identiques ou similaires. Le nombre d'éléments 40, 140 déformables élastiquement du second dispositif de fixation 24 correspond notamment à un nombre maximal de cellules électrochimiques 16, 116 aptes à être assemblées au support 14.

Dans le mode de réalisation représenté, le second dispositif de fixation 24 comprend en outre une pièce intermédiaire 41. Ladite pièce intermédiaire 41 a la forme d'une réglette de section en L. Dans le mode de réalisation représenté, la pièce intermédiaire 41 est fixée à la face principale 26, s'étendant selon X, en contact direct avec ladite face principale 26. Les éléments 40, 140 sont fixés en contact avec ladite pièce intermédiaire 41 et ne sont donc pas en contact direct avec la face principale 26.

En variante non représentée, le second dispositif de fixation 24 ne comprend pas de pièce intermédiaire et les éléments 40, 140 sont fixés en contact direct avec la face principale 26.

Dans le mode de réalisation représenté, les éléments 40 et 140 ont une forme identique et une même disposition perpendiculairement à la direction X. Seul le premier élément 40 sera décrit ci-après.

Dans le mode de réalisation représenté, le premier élément 40 déformable élastiquement est une lame élastique, préférentiellement métallique. Ladite lame élastique a la forme d'une bande s'étendant entre une première 42 et une seconde 44 extrémités.

L'élément 40 comporte une première 46 et une seconde 48 portions planes, réunies par une jonction 50.

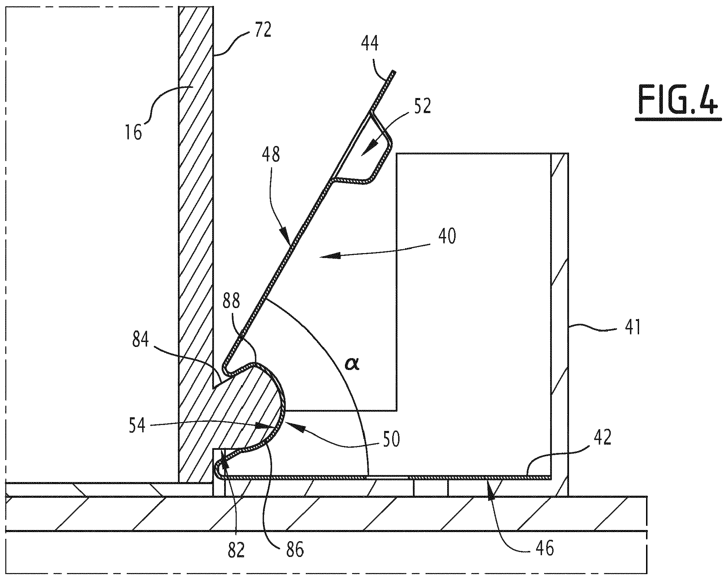

Dans la configuration assemblée de la figure 1, les première 46 et seconde 48 portions planes sont inclinées d'un angle a, visible sur la figure 4. L'angle α est par exemple compris entre 45° et 75°. Au repos, sans contrainte extérieure sur l'élément 40, les première 46 et seconde 48 portions planes sont de préférence inclinées d'un angle proche de, ou égal à, l'angle a.

La première portion plane 46, du côté de la première extrémité 42, est disposée sensiblement horizontalement et fixée à la pièce intermédiaire 41. La seconde portion plane 48, du côté de la seconde extrémité 44, forme une saillie par rapport à la face principale 26 du fond 20.

La seconde portion plane 48 est mobile élastiquement par rapport à la face principale 26 du fond 20. En particulier, la seconde portion plane 48 comporte un orifice 52 dans lequel un outil peut être introduit pour appuyer sur ladite seconde portion plane 48, comme il sera détaillé ci-après.

La jonction 50, disposée entre les première 46 et seconde 48 portions planes, est repliée ou recourbée sous la forme d'une encoche 54 orientée vers le premier dispositif de fixation 22. L'encoche 54 forme une surface concave, s'étendant selon X et de section sensiblement en U. La forme de l'encoche 54 sera détaillée ci-après.

Les première 16 et deuxième 116 cellules électrochimiques vont à présent être décrites. Plus précisément, dans la suite de la description, il est considéré que les cellules électrochimiques de l'ensemble 10 sont identiques. Seule la première cellule 16 sera décrite ci-après.

La cellule 16 comporte : une enveloppe externe 60 ; et au moins une borne 62, 64 électrique, disposée sur ladite enveloppe externe. Plus précisément, la cellule comporte de préférence une borne positive 62 et une borne négative 64.

L'enveloppe externe 60 s'étend dans une direction longitudinale, entre une première 66 et une seconde 68 extrémité. Dans la configuration assemblée de la figure 1, la direction longitudinale est parallèle à Y.

L'enveloppe externe 60 présente une forme générale sensiblement parallélépipédique. Plus précisément, chacune des première 66 et seconde 68 extrémités comporte respectivement une première 70 et une seconde 72 faces d'extrémité. Lesdites faces d'extrémité sont sensiblement planes et parallèles entre elles. Dans la configuration assemblée de la figure 1, les première 70 et seconde 72 faces d'extrémité sont disposées dans des plans (X, Z).

En outre, l'enveloppe externe 60 comporte deux faces latérales 74, sensiblement planes et parallèles entre elles, reliant les première 70 et seconde 72 faces d'extrémité. Dans la configuration assemblée de la figure 1, chaque face latérale 74 est disposée dans un plan (Y, Z).

En outre, l'enveloppe externe 60 comporte une face supérieure 76 et une face inférieure 78, disposées dans des plans (X, Y) dans la configuration assemblée de la figure 1.

L'enveloppe externe 60 comporte par ailleurs un premier 80 et un second 82 organes d'assemblage amovible, respectivement avec le premier 22 et avec le second 24 dispositif de fixation.

Plus précisément, l'enveloppe externe 60 comporte un premier 80 et un second 82 ergots, en saillie par rapport, respectivement, à la première 70 et à la seconde 72 faces d'extrémité. Chacun des premier 80 et second 82 ergots est disposé proche de la face inférieure 78.

Dans le mode de réalisation représenté, les premier 80 et second 82 ergots sont identiques et seront décrits simultanément ci-après. Plus précisément, dans le mode de réalisation représenté, l'enveloppe externe 60 de la première cellule électrochimique 16 est de forme sensiblement symétrique selon un plan perpendiculaire à la direction longitudinale.

L'ergot 80, 82 s'étend sur une partie, et de préférence sur la totalité, d'une largeur de la première 70 ou seconde 72 face d'extrémité, entre les faces latérales 74.

L'ergot 80, 82 forme une surface cylindrique s'étendant perpendiculairement à la direction longitudinale de la cellule 16. Plus précisément, ladite surface cylindrique comporte une partie plane 84 et une partie courbe 86.

Chacune des parties plane 84 et courbe 86 est adjacente à la face d'extrémité 70, 72 portant l'ergot 80, 82. Les parties plane 84 et courbe 86 se rejoignent au niveau d'une arête 88 saillante, perpendiculaire à la direction longitudinale de la cellule 16.

La partie plane 84 est sensiblement orientée vers la face supérieure 76 de l'enveloppe 60.

La partie courbe 86 forme une contre-surface de came, apte à coopérer avec la surface de came 30 du premier dispositif de fixation 22, comme il sera décrit ci-après. Plus précisément, la partie courbe 86 a une forme sensiblement complémentaire de la surface de came 30.

En outre, la surface concave de l'encoche 54 de l'élément 40, 140 déformable élastiquement du second dispositif de fixation 24 est sensiblement complémentaire de l'arête 88 saillante et d'une portion de chacune des parties plane 84 et courbe 86, adjacentes à ladite arête.

En variante non représentée de l'invention, les premier et un second organes d'assemblage amovible portés par l'enveloppe externe de la cellule électrochimique 16, 116 comprennent des surfaces concaves ; et les premier 22 et second 24 dispositifs de fixation comprennent des surfaces convexes complémentaires.

Dans le mode de réalisation représenté, chacune des bornes 62, 64 électriques de la cellule 16 électrochimique est disposée sur l'une des première 70 et seconde 72 faces d'extrémité, de sorte que les bornes positive 62 et négative 64 soient à l'opposé l'une de l'autre. A titre d'exemple, sur la figure 1, la borne positive 62 de la première cellule 16 est portée par la première face d'extrémité 70 et la borne négative 64 est portée par la seconde face d'extrémité 72.

En variante non représentée, les bornes électriques sont disposées sur la même face d'extrémité, ou encore sur la face supérieure 76 de l'enveloppe externe.

Un procédé de montage de l'ensemble 10, dans la configuration assemblée de la figure 1, va maintenant être décrit.

On considère qu'au début du procédé de montage, le support 14 et la première cellule 16 électrochimique sont dissociés l'un de l'autre.

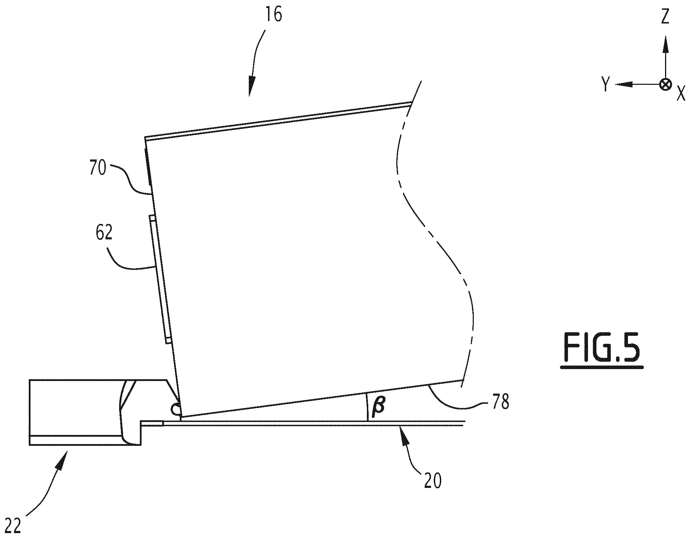

Tout d'abord, la première cellule 16 est disposée au-dessus du support 14 et inclinée par rapport à la face principale 26 du fond 20, la première face d'extrémité 70 étant ainsi plus basse que la seconde face d'extrémité 72. Plus précisément, la première cellule 16 est disposée de sorte que les parois latérales 74 soient situées dans des plans (Y, Z) et que la face inférieure 78 forme un angle β avec l'horizontale, comme visible sur la figure 5. L'angle β est compris entre 5° et 75°, préférentiellement entre 10° et 60°, plus préférentiellement entre 20° et 45°.

La première cellule 16 étant ainsi inclinée, le premier ergot 80 est inséré dans la rainure 34 du premier dispositif de fixation 22, la partie courbe 86 dudit premier ergot étant ainsi au contact de la surface de came 30 formée par ladite rainure 34. La partie courbe 86 épouse alors sensiblement la surface de came 30.

Si nécessaire, la première cellule 16 est alors déplacée selon X, le premier ergot 80 coulissant dans la rainure 34, de sorte à disposer un plan (Y, Z) médian de la première cellule 16 dans un plan (Y, Z), dit premier plan de rotation 90, visible sur la figure 2. Le premier plan de rotation 90 est un plan médian du premier élément 40, déformable élastiquement, du second dispositif de fixation 24.

La première cellule 16 se trouve alors dans une position dite première position initiale, visible sur la figure 5.

Un mouvement de rotation est alors appliqué à la première cellule dans le premier plan de rotation 90, de sorte à rapprocher la deuxième face d'extrémité 72 du support 14. Durant ce mouvement de rotation, la partie courbe 86 du premier ergot 80 coulisse contre la surface de came 30 de la rainure 34.

Le mouvement de la première cellule 16 par rapport au support 14 est essentiellement un mouvement de rotation autour d'un axe parallèle à X, éventuellement associé à un faible mouvement de translation dans le premier plan de rotation 90, selon les formes de la surface 30 et de la contre-surface 86 de came.

Le mouvement de rotation présente le second ergot 82 face à l'encoche 54 du premier élément 40. Selon un mode de réalisation, au moyen d'un outil de type pointe inséré dans l'orifice 52, le premier élément 40 est alors déformé élastiquement en rapprochant l'une de l'autre les première 46 et seconde 48 portions planes. Cette déformation permet d'écarter les lèvres de l'encoche 54 et d'emboîter élastiquement ladite encoche sur le second ergot 82.

En variante, c'est le second ergot 82, au cours de la rotation de la première cellule 16, qui appuie sur le premier élément 40 et permet le clipsage de l'encoche 54 sur ledit second ergot.

L'encoche 54 du premier élément 40 étant emboîtée sur le second ergot 82, la première cellule est dans une position dite première position finale, correspondant à la configuration assemblée de la figure 1.

Dans ladite configuration assemblée, la rainure 34 et le premier ergot 80, d'une part, et l'encoche 54 et le second ergot 82, d'autre part, forment des butées qui maintiennent la première cellule 16 fixe en translation selon Y et selon Z.

Dans le cas où l'ensemble 10 comporte en outre au moins une deuxième cellule 116 électrochimique, un procédé de montage comporte en outre les étapes suivantes : tout d'abord, la deuxième cellule 116 électrochimique est approchée du support 14. Plus précisément, un plan (Y, Z) médian de la deuxième cellule 116 est disposé dans un plan (Y, Z) dit deuxième plan de rotation 190, visible sur la figure 2. Le deuxième plan de rotation 190 est un plan médian du deuxième élément 140, du second dispositif de fixation 24, adjacent au premier élément 40.

Le premier ergot 80 de la deuxième cellule 116 est inséré dans la rainure 34 pour placer la deuxième cellule dans une deuxième position initiale, analogue à la première position initiale précédemment décrite pour la première cellule 16.

Les premier 80 et second 82 ergots étant identiques, la face choisie comme première face d'extrémité 70 pour la deuxième cellule 116 dépend de la polarité de la borne 62, 64 portée par ladite face. Par exemple, dans le mode de réalisation représenté, la première face d'extrémité de la première cellule 16 porte une borne positive 62 et la première face d'extrémité de la deuxième cellule 116 porte une borne négative 64.

A partir de la deuxième position initiale, un mouvement de rotation est appliqué à la deuxième cellule dans le deuxième plan de rotation 190, comme décrit précédemment pour la première cellule. L'encoche 54 du deuxième élément 140 du second dispositif de fixation 24 s'emboîte élastiquement sur le second ergot 82 de la deuxième cellule, de sorte à maintenir ladite deuxième cellule dans une deuxième position finale, visible sur la figure 2. La deuxième cellule 116 est assemblée fixe en translation selon Y et Z par rapport au support 14.

La configuration du support 14 et des cellules 16, 116 facilite le procédé d'assemblage, augmentant ainsi la vitesse de montage d'un module ou d'un pack. La fabrication de l'enveloppe externe des cellules est également simplifiée par la forme identique des ergots 80 et 82.

Selon un mode de réalisation, plusieurs cellules sont prépositionnées à une extrémité du premier dispositif 22, en insérant le premier ergot 80 dans la rainure 34 ; puis le procédé de montage décrit ci-dessus est successivement appliqué à chaque cellule en commençant par le déplacement selon X, le premier ergot 80 coulissant dans la rainure 34, jusqu'au vis-à-vis avec l'élément 40, 140 correspondant.

A la fin du procédé de montage, les première 16 et deuxième 116 cellules étant respectivement dans la première et dans la deuxième positions finales, les faces supérieures 76 des première 16 et deuxième 116 cellules sont alors sensiblement coplanaires et leurs faces latérales 74 sont parallèles. En outre, la borne positive 62 de l'une des première et deuxième cellules est située proche de la borne négative 64 de l'autre des première et deuxième cellules.

Afin de réaliser l'organe électrique 12 décrit précédemment avec l'ensemble 10 ainsi monté, les première 16 et deuxième 116 cellules sont ensuite reliées électriquement par le dispositif d'interconnexion 18. Dans l'exemple représenté à la figure 2, la borne positive 62 de la première cellule 16 est reliée à la borne négative 64 de la deuxième cellule 116. Les première et deuxième cellules sont ainsi reliées en série.

Selon un mode de réalisation préférentiel, le second dispositif de fixation 24 comprend une pluralité d'éléments déformables élastiquement, analogues au premier 40 et au deuxième 140 éléments ; et le montage de l'ensemble 10 ou la réalisation de l'organe électrique 12 comprend ensuite l'assemblage d'une pluralité de cellules électrochimiques, analogues aux première et deuxième cellules, au support 14. Chaque cellule électrochimique est notamment assemblée à l'un des éléments déformables élastiquement du second dispositif de fixation 24.

Les cellules sont ensuite reliées électriquement deux à deux par des dispositifs d'interconnexion, analogues au dispositif d'interconnexion 18.

Le mode de réalisation représenté illustre le cas de cellules 16, 116 reliées en série. Cependant, le support 14 permet également un assemblage avec des cellules 16, 116 électrochimiques pour un montage électrique en parallèle.

L'ensemble 10 et l'organe électrique 12 décrits ci-dessus permettent un démontage individuel de l'une des cellules électrochimiques, par exemple pour maintenance ou remplacement. Un procédé de démontage est décrit ci-après, pour lequel on considère le cas d'une cellule 16 dont l'emplacement est quelconque selon X dans le support 14.

Tout d'abord, le ou les dispositifs 18 d'interconnexion, éventuellement reliés à la cellule 16 concernée, sont dissociés de ladite cellule.

Ensuite, un outil de type pointe est introduit dans l'orifice 52 de l'élément 40 du second dispositif de fixation 24, assemblé à ladite cellule. Un appui est exercé sur l'outil pour rapprocher les première 46 et seconde 48 portions planes et écarter les lèvres de l'encoche 54 de l'élément 40.

De manière simultanée, la seconde face d'extrémité 72 est déplacée vers le haut, ce qui permet de libérer le second ergot 82 de l'encoche 54 et de faire pivoter le premier ergot 80 dans la rainure 34 du premier dispositif de fixation. Lorsque la cellule 16 est dans une position inclinée analogue à la première position initiale représentée à la figure 5, le premier ergot 80 est extrait de la rainure 34. La cellule 16 est ainsi dissociée du support 14.

En variante, l'appui pour écarter les lèvres de l'encoche 54 est réalisé à la main par l'opérateur, sur la seconde extrémité 44 de l'élément 40. L'outil de type pointe n'est donc pas indispensable au démontage des cellules.

Ce procédé de démontage permet de remplacer individuellement des cellules 16, 116 dans l'organe électrique 12 réalisé à partir de l'ensemble 10, ce qui facilite l'entretien dudit organe électrique.

## Revendications

1. Ensemble (10) pour la formation d'un organe électrique (12), ledit ensemble comprenant un support (14) et au moins une première cellule électrochimique (16),
le support comportant : un fond (20) comprenant une face principale (26) ; et un premier (22) et un second (24) dispositifs de fixation, en saillie par rapport à la face principale du fond, les premier et second dispositifs de fixation étant en vis-à-vis selon une direction (Y) d'assemblage,
la première cellule électrochimique (16) comprenant une enveloppe externe (60) s'étendant selon une direction longitudinale entre une première (70, 80) et une seconde (72, 82) extrémités,
le support et la première cellule électrochimique étant configurés pour la mise en contact de la première extrémité (70, 80) de la première cellule et du premier dispositif (22) de fixation, la première cellule étant dans une première position initiale par rapport au support, puis pour la rotation de la première cellule par rapport au support dans un premier plan de rotation comprenant la direction d'assemblage, jusqu'à une première position finale,
le second dispositif de fixation comprenant au moins un premier élément (40) déformable élastiquement, apte à s'emboîter élastiquement sur la seconde extrémité (72, 82) de la première cellule durant la rotation de ladite première cellule, de sorte à maintenir la première cellule en première position finale.

2. Ensemble selon la revendication 1, dans lequel : le premier dispositif de fixation (22) comprend une surface de came (30) recourbée, ladite surface de came s'étendant selon une direction génératrice (X) perpendiculaire au premier plan de rotation ; et
la première extrémité (70, 80) de l'enveloppe externe de la première cellule électrochimique comprend : une première face d'extrémité (70), sensiblement perpendiculaire à la direction longitudinale ; et un premier ergot (80) formant saillie par rapport à ladite première face d'extrémité,
le premier ergot comprenant une contre-surface de came (86), recourbée et sensiblement complémentaire de la surface de came du premier dispositif de fixation, la contre-surface de came étant apte à coulisser contre la surface de came durant la rotation de la première cellule par rapport au support dans le premier plan de rotation.

3. Ensemble selon la revendication 2, dans lequel la surface de came (30) est de forme concave, le premier dispositif de fixation comprenant une rainure (34) perpendiculaire au premier plan de rotation et matérialisant ladite surface de came ; et la contre-surface de came (86) est de forme convexe.

4. Ensemble selon l'une des revendications précédentes, dans lequel :
la seconde extrémité (72, 82) de l'enveloppe externe de la première cellule électrochimique comprend : une seconde face d'extrémité (72), sensiblement perpendiculaire à la direction longitudinale ; et un second ergot (82) formant saillie par rapport à ladite seconde face d'extrémité ; et
l'au moins un premier élément (40) déformable élastiquement du second dispositif de fixation comprend une lame élastique, ladite lame élastique comprenant une encoche (54) apte à s'emboîter sur le second ergot, de sorte à maintenir la première cellule en première position finale.

5. Ensemble selon la revendication 4 prise en combinaison avec la revendication 2, dans lequel les premier (80) et second (82) ergots sont de forme identique.

6. Ensemble selon l'une des revendications précédentes, dans lequel l'enveloppe externe (60) de la première cellule électrochimique comporte deux faces latérales (74), sensiblement planes et parallèles, les faces latérales reliant l'une à l'autre la première et la seconde extrémité de l'enveloppe externe.

7. Ensemble selon l'une des revendications précédentes, comprenant en outre au moins une deuxième cellule électrochimique (116),
la deuxième cellule électrochimique comprenant une enveloppe externe (60) s'étendant selon une direction longitudinale entre une première (70, 80) et une seconde (72, 82) extrémités,
le support et la deuxième cellule électrochimique étant configurés pour la mise en contact de la première extrémité (70, 80) de la deuxième cellule au premier dispositif de fixation, la deuxième cellule étant dans une deuxième position initiale par rapport au support, puis pour la rotation de la deuxième cellule par rapport au support dans un deuxième plan de rotation comprenant la direction d'assemblage, jusqu'à une deuxième position finale,
le second dispositif de fixation comprenant au moins un deuxième élément (140) déformable élastiquement, apte à s'emboîter élastiquement sur la seconde extrémité (72, 82) de la deuxième cellule durant la rotation de ladite deuxième cellule, de sorte à maintenir la deuxième cellule en deuxième position finale.

8. Ensemble selon la revendication 7, dans lequel chacune des première (16) et deuxième (116) cellules électrochimiques comporte deux bornes électriques (62, 64), situées à l'extérieur de l'enveloppe externe de ladite première ou deuxième cellule électrochimique.

9. Ensemble selon la revendication 8, comprenant en outre un dispositif d'interconnexion (18), apte à relier électriquement une borne électrique de la première cellule électrochimique et une borne électrique de la deuxième cellule électrochimique.

10. Procédé d'assemblage de l'ensemble selon l'une des revendications précédentes, comprenant les étapes suivantes :
mise en contact de la première extrémité (70, 80) de la première cellule et du premier dispositif (22) de fixation, la première cellule étant dans la première position initiale par rapport au support ; puis
rotation de la première cellule par rapport au support dans le premier plan de rotation, de sorte à approcher du support la seconde extrémité (72, 82) de la première cellule ; puis
emboîtement élastique du premier élément (40) déformable élastiquement sur la seconde extrémité (72, 82) de la première cellule, de sorte à maintenir la première cellule en première position finale.

11. Procédé selon la revendication 10, d'un ensemble selon l'une des revendications 7 à 9, ledit procédé comprenant en outre les étapes suivantes :
mise en contact de la première extrémité (70, 80) de la deuxième cellule (116) et du premier dispositif (22) de fixation, la deuxième cellule étant dans la deuxième position initiale par rapport au support ; puis
rotation de la deuxième cellule par rapport au support dans le deuxième plan de rotation, de sorte à approcher du support la seconde extrémité (72, 82) de la deuxième cellule ; puis
emboîtement élastique du deuxième élément (140) déformable élastiquement sur la seconde extrémité (72, 82) de la deuxième cellule, de sorte à maintenir la deuxième cellule en deuxième position finale.

12. Procédé selon la revendication 11, d'un ensemble selon la revendication 9, comprenant ensuite une étape dans laquelle une borne électrique (62) de la première cellule électrochimique (16) et une borne électrique (64) de la deuxième cellule électrochimique (116) sont reliées électriquement par le dispositif d'interconnexion (18).

13. Organe électrique (12), de type module ou batterie, comprenant : un support (14) ; au moins une première (16) et une deuxième (116) cellules électrochimiques ; et au moins un dispositif d'interconnexion (18),
le support comportant : un fond (20) comprenant une face principale (26) ; et un premier (22) et un second (24) dispositifs de fixation, en saillie par rapport à la face principale du fond, les premier et second dispositifs de fixation étant en vis-à-vis selon une direction (Y) d'assemblage,
chacune des première (16) et deuxième (116) cellules électrochimiques comprenant : une enveloppe externe (60) s'étendant selon une direction longitudinale entre une première (70, 80) et une seconde (72, 82) extrémités ; et deux bornes électriques (62, 64), situées à l'extérieur de l'enveloppe externe de ladite première ou deuxième cellule électrochimique,
le support et chacune des première et deuxième cellules électrochimiques étant configurés pour la mise en contact de la première extrémité (70, 80) de chacune desdites cellules électrochimiques et du premier dispositif (22) de fixation, ladite cellule électrochimique étant dans une position initiale par rapport au support, puis pour la rotation de ladite cellule électrochimique par rapport au support dans un plan de rotation comprenant la direction d'assemblage, jusqu'à une position finale,
le second dispositif de fixation comprenant au moins un premier (40) et un deuxième (140) éléments déformables élastiquement, chacun desdits premier et deuxième éléments déformables étant emboîté élastiquement sur la seconde extrémité (72, 82), respectivement de la première et de la deuxième cellule électrochimique,
l'une (62, 64) des bornes électriques de la première cellule électrochimique et l'une (62, 64) des bornes électriques de la deuxième cellule électrochimique étant reliées électriquement par le dispositif d'interconnexion (18),
l'organe électrique étant susceptible d'être obtenu par un procédé selon la revendication 12.

14. Procédé de démontage d'un organe électrique selon la revendication 13, comprenant les étapes suivantes :
dissociation du dispositif d'interconnexion (18) d'avec la borne électrique de la première cellule électrochimique (16) et/ou d'avec la borne électrique de la deuxième cellule électrochimique (116) ; puis
appui sur une extrémité (44) du premier élément (40) déformable élastiquement, de sorte à dissocier ledit premier élément (40) de la seconde extrémité (72, 82) de la première cellule ; et simultanément, rotation de la première cellule par rapport au support dans le premier plan de rotation, jusqu'à la première position initiale ; puis
dissociation de la première extrémité (70, 80) de la première cellule et du premier dispositif (22) de fixation.
